# EUROPÄISCHE PATENTSCHRIFT

(11) **EP 3 546 202 B1**
(45) Veröffentlichungstag und Bekanntmachung des Hinweises auf die Patenterteilung: **25.11.2020**
(21) Anmeldenummer: 18164892.4
(22) Anmeldetag: 29.03.2018
(51) Int. Cl.: B29C 73/16, B29B 7/00, B60C 19/12

(54) **VERFAHREN ZUR HERSTELLUNG EINES SELBSTTÄTIG ABDICHTENDEN REIFENDICHTMITTELS, REIFENDICHTMITTEL UND FAHRZEUGLUFTREIFEN, DER DAS REIFENDICHTMITTEL AUFWEIST**
METHOD FOR THE PREPARATION OF AN AUTOMATICALLY SEALING TIRE SEALANT, TYRE SEALANT AND PNEUMATIC TYRE HAVING THE TYRE SEALANT
PROCÉDÉ DE PRODUCTION D'UN AGENT D'ÉTANCHÉITÉ POUR PNEUMATIQUES, ÉTANCHÉIFIANT, SE FORMANT AUTOMATIQUEMENT, AGENT D'ÉTANCHÉITÉ POUR PNEUMATIQUES ET PNEUMATIQUE DE VÉHICULE, LEQUEL COMPORTE L'AGENT D'ÉTANCHÉITÉ POUR PNEUMATIQUES

(43) Veröffentlichungstag der Anmeldung: 02.10.2019
(73) Patentinhaber: Continental Reifen Deutschland GmbH, 30165 Hannover (DE)
(72) Erfinder: Tim Kee, Sherry-Ann, 30167 Hannover (DE); Doroshenko, Mikheil, 30823 Garbsen (DE); Guardalabene, Joe, 30659 Hannover (DE)
(74) Vertreter: Finger, Karsten

(56) Entgegenhaltungen:
- EP-A1- 3 009 473
- WO-A1-2008/141848
- US-A- 4 181 647

## Beschreibung

Die Erfindung betrifft ein Verfahren zur Herstellung eines selbsttätig abdichtenden Reifendichtmittels, ein Reifendichtmittel und einen Fahrzeugluftreifen, der das Reifendichtmittel aufweist.

Selbstdichtend ausgestaltete Fahrzeugluftreifen sind beispielsweise aus der DE 102006059286 A1 der Anmelderin bekannt. Hierbei werden Reifen-Standardkonstruktionen nachträglich mit einer Dichtmittellage versehen. Das Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.
Das Dichtmittel zeichnet sich durch Luftdichtigkeit, starke Klebrigkeit und ausgewogenes Fließverhalten aus.

In der WO 2008/141848 A1 ist ein Verfahren zur Herstellung eines Reifendichtmittels offenbart, wobei dieses aus zwei Dichtmittelkomponenten A und B hergestellt wird. Die Komponente A ist hierbei eine hochviskose Komponente, welche wenigstens einen Kautschuk enthält. Die zweite Dichtmittelkomponente B ist gemäß der Offenbarung der WO 2008/141848 A1 im Vergleich zur ersten Dichtmittelkomponente A niedrigviskos und wird separat hergestellt. Die WO 2008/141848 A1 offenbart ferner, dass Vernetzungschemikalien, wie u. a. und beispielsweise ein peroxidischer Aktivator, beispielsweise auf der Basis von Diaroylperoxiden, Diacylperoxiden oder Peroxyestem, der Dichtmittelzusammensetzung zugegeben wird.

Vernetzungschemikalien werden üblicherweise in deutlich geringeren Mengen eingesetzt, als beispielsweise Kautschuke oder auch Füllstoffe, die die Hauptmasse des Dichtmittels darstellen können.
Die meisten der Vernetzungschemikalien, wie insbesondere Peroxide, wie beispielsweise Dibenzoylperoxid, liegen zudem als Feststoffe vor.
Somit ergibt sich die Herausforderung, dass durch die geringen Mengen an überwiegend festen Vernetzungschemikalien keine homogene Verteilung in der Dichtmittelzusammensetzung erreicht wird, was wiederum eine unzureichende Vernetzung zur Folge haben könnte. Um dies zu vermeiden, könnten größere Mengen an Vernetzungschemikalien eingesetzt werden. Dies bringt jedoch ökologische und ökonomische Nachteile mit sich.
Eine homogene Verteilung kann auch durch eine sehr lange Mischzeit erzielt werden, was jedoch durch den hohen Energieaufwand ebenfalls jedoch ökologische und ökonomische Nachteile mit sich bringt.

Der vorliegenden Erfindung liegt daher die Aufgabe zugrunde, ein Verfahren zur Herstellung eines selbsttätig abdichtenden Reifendichtmittels enthaltend wenigstens eine Vemetzungschemikalie bereitzustellen, mit dem eine möglichst homogene Verteilung der Vemetzungschemikalie(n) in der Dichtmittelzusammensetzung erreicht wird. Hierdurch soll eine homogene Vernetzung erreicht und/oder die für eine ausreichende Vernetzung nötigen Mengen an Vernetzungschemikalien und/oder die notwendige Mischzeit reduziert werden.

Gelöst wird die Aufgabe erfindungsgemäß dadurch, dass wenigstens eine Vernetzungschemikalie in einer flüssigen Zusammensetzung Z mit einer dynamischen Scherviskosität bei 20 °C von 1 bis 1000 mPas zugegeben wird.

Sofern nichts anderes angegeben ist, bezieht sich die "Viskosität" der flüssigen Zusammensetzung Z auf die dynamische Scherviskosität bei 20 °C (nach Ericksen). Aufgrund der teilweise hohen Reaktivität von Vernetzungschemikalien wird die Viskosität der Zusammensetzung Z bei 20 °C gemessen und angegeben und nicht bei höheren Temperaturen, wie z. B. bei 100 °C im Falle von höherviskosen Substanzen.

Durch die Zugabe der wenigstens einen Vernetzungschemikalie in einem flüssigen Medium wird eine bessere Verteilung der Vernetzungschemikalie im Dichtmittel erzielt. Somit wird auch ein homogeneres Netzwerk bei der Vernetzung des Dichtmittels erzielt. Wie oben beschrieben kann damit auch die Mengen an Vernetzungschemikalien reduziert werden.
Gleichzeitig ergibt sich eine kürzere Einmischzeit, um eine homogene Verteilung zu erzielen.
Dabei ist insbesondere die wenigstens eine Vernetzungschemikalie in der flüssigen Zusammensetzung Z homogen verteilt. Die homogene Verteilung kann insbesondere mittels Lichtmikroskopie ermittelt werden.

Eine weitere Aufgabe der Erfindung besteht darin, ein selbsttätig abdichtendes Reifendichtmittel sowie einen selbstdichtenden Fahrzeugluftreifen bereitzustellen, wobei das Reifendichtmittel eine verbesserte Homogenität aufweist oder auf vereinfachte Weise homogen hergestellt werden kann.

Gelöst wird die Aufgabe erfindungsgemäß dadurch, dass das Reifendichtmittel mittels des beschriebenen erfindungsgemäßen Verfahrens, inklusiver aller genannten Ausführungsformen, hergestellt ist und der Fahrzeugluftreifen wenigstens ein erfindungsgemäß hergestelltes Reifendichtmittel auf der dem Laufstreifen gegenüberliegenden Innenfläche aufweist. Dem Fachmann sind Verfahren und Vorrichtungen zum Auftragen des Reifendichtmittels auf die Innenfläche des Reifens bekannt.

Die Einheit "mPas" bedeutet Millipascal-Sekunde (Millipascal mal Sekunde) und ist dem Fachmann bekannt.

Gemäß vorteilhafter Ausführungsformen weist die flüssigen Zusammensetzung Z eine Viskosität von 1 bis 600 mPas, besonders bevorzugt 1 bis 500 mPas auf, wodurch sich die genannten Vorteile in besonderem Maße ergeben.

Bei der flüssigen Zusammensetzung Z kann es sich prinzipiell um jegliche Zusammensetzung in den genannten Viskositätsbereichen handeln. Gemäß vorteilhafter Ausführungsformen enthält die flüssige Zusammensetzung Z wenigstens eine organische Flüssigkeit, also eine Flüssigkeit, die aus Kohlenwasserstoffhaltigen Molekülen gebildet ist. Insbesondere organische Flüssigkeiten sind als Medium für reaktive Vernetzungschemikalien geeignet, um unerwünschte Reaktionen, beispielsweise mit Wasser, zu vermeiden.

Dichtmittelzusammensetzungen können je nach Art der Vernetzung eine oder mehrere verschiedene Vernetzungschemikalien enthalten.
Dem Fachmann ist bekannt, dass die Vernetzungschemikalien und auch die zu vernetzenden Bestandteile, wie beispielsweise der Kautschuk, nach der Vernetzung in chemisch veränderter Form, beispielsweise als Derivate oder Abbauprodukte vorliegen. Die Angaben zu den Bestandteilen beziehen sich somit bei dem erfindungsgemäßen Verfahren insbesondere auf die Herstellung des noch nicht vernetzten Dichtmittels.

Die Vemetzungschemikalie(n), die erfindungsgemäß in der beschriebenen Flüssigkeit zugegeben wird, kann beispielsweise ein Vernetzer, oder ein Vernetzungsinitiator (auch Aktivator genannt) sein.

Gemäß einer besonders vorteilhaften Ausführungsform der Erfindung ist die Vemetzungschemikalie ein Vernetzungsinitiator. Vernetzungsinitiatoren werden üblicherweise als Feststoff oder als Paste, mit einer vergleichsweise hohen Viskosität von beispielsweise mehr als 10.000 Pas, einer Dichtmittelzusammensetzung zugegeben. Somit besteht insbesondere bei Vernetzungsinitiatoren die eingangs beschriebene Herausforderung der Verteilung oder Überdosierung.

Ein Vernetzungsinitiator ist eine chemische Verbindung, welche die Vernetzung des Dichtmittels initiiert.
Bei dem Vernetzungsinitiator kann es sich beispielsweise und bevorzugt um ein Metalloxid, wie Bleioxid, oder andere Metalloxide oder eine peroxidische Verbindung handeln.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Gemäß einer bevorzugten und beispielhaften Ausführungsform der Erfindung ist der Vernetzungsinitiator Dibenzoylperoxid.

Die flüssige Zusammensetzung Z kann eine Dispersion, insbesondere eine Suspension, oder eine Lösung der wenigstens einen Vemetzungschemikalie in einer Flüssigkeit sein. Gemäß einer vorteilhaften Ausführungsform der Erfindung handelt es sich um eine Suspension der wenigstens einen Vernetzungschemikalie in einer Flüssigkeit.

Dibenzoylperoxid ist u. a. als pastöse Dibenzoylperoxid-Lösung (50 Gew.-% Dibenzoylperoxid in Dibutylmaleat) im Handel erhältlich. Eine derartige Zusammensetzung weist jedoch eine Viskosität von ca. 15000 mPas auf und lässt sich nur unter vergleichsweise hohem Aufwand, insbesondere einer langen Mischzeit, homogen verteilen.

Gemäß einem erfindungsgemäßen Beispiel kann Perkadox ® L-40 RPS verwendet werden, wobei es sich um eine 40-%ige Suspension von Dibenzoylperoxid in einer organischen Flüssigkeit (Gemisch aus organischen Lösungsmitteln) handelt.

Bei dem hergestellten Dichtmittel kann es sich prinzipiell um jegliche Dichtmittelzusammensetzung handeln, der wenigstens eine Vemetzungschemikalie zugegeben wird.

Gemäß einer vorteilhaften Ausführungsform der Erfindung basiert das Dichtmittel auf der Vernetzung eines Kautschukes und/oder eines Polyolefins.
Bei dem erfindungsgemäßen Verfahren werden der Dichtmittelzusammensetzung somit gemäß einer bevorzugten Ausführungsform wenigstens ein Kautschuk und/oder wenigstens ein Polyolefin zugegeben.

Gemäß einer beispielhaften und vorteilhaften Ausführungsform der Erfindung umfasst das Verfahren wenigstens die folgenden Verfahrensschritte:
a) Vermischen wenigstens eines Kautschuks mit wenigstens einem Füllstoff zur Herstellung eines Masterbatches; und
b) Vermischen des Masterbatches mit wenigstens einem Polyolefin zur Herstellung einer Komponente A; und
c) Bereitstellung wenigstens einer Vemetzungschemikalie in einer flüssigen Zusammensetzung Z mit einer dynamischen Scherviskosität bei 20 °C von 1 bis 1000 mPas, wodurch eine Komponente B enthaltend zumindest die wenigstens eine Vemetzungschemikalie erhalten wird; und
d) Vermischen von Komponente A und Komponente B zur Herstellung des Reifendichtmittels.

Bei dem Kautschuk kann es sich um alle dem Fachmann bekannten Kautschuktypen handeln. Es ist auch ein Gemisch verschiedener Kautschuke denkbar.
Gemäß einer bevorzugten Ausführungsform der Erfindung handelt es sich bei dem Kautschuk in Verfahrensschritt a) um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) und/oder Silikonkautschuk.
Diese Kautschuktypen sind für die Verarbeitungstemperaturen bei der Herstellung des Reifendichtmittels und später bei der Anwendung im Reifen besonders gut geeignet.

Besonders bevorzugt wird in Verfahrensschritt a) wenigstens Butylkautschuk (IIR) verwendet. Butylkautschuk eignet sich besonders gut, da er eine vergleichsweise hohe Luftdichtigkeit aufweist.

Bei dem Füllstoff kann es sich um alle dem Fachmann bekannten Füllstoffe handeln, wie insbesondere Ruß und/oder Kieselsäure.
Gemäß einer bevorzugten Ausführungsform der Erfindung umfasst der Füllstoff in Verfahrensschritt a) wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Hierbei kann es sich um alle dem Fachmann bekannten Rußtypen handeln, wie insbesondere und bevorzugt ein Ruß des Typs N326.

In Verfahrensschritt a) können weitere Bestandteile hinzugegeben werden, wie Verarbeitungshilfsmittel, insbesondere Klebrigmacher wie z. B. Alkyl- oder Phenolharze, und/oder wenigstens ein Weichmacher, wie z. B. ein Öl, sowie gegebenenfalls weitere Zusatzstoffe, wie z. B. Farbpigmente.
Bei dem Öl kann es sich um alle dem Fachmann bekannten Öle handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Verfahrensschritt a) kann dabei in einer oder mehreren Mischstufen durchgeführt werden. In Verfahrensschritt a) kann bevorzugt und insbesondere auch wenigstens ein Vernetzer hinzugefügt werden.
Insbesondere durch die Kombination der Zugabe eines Vernetzers bei der Herstellung der Komponente A mit der Zugabe eines Vemetzungsinitiators in Komponente B wird ein besonders wirksames, im Pannenfall schnell abdichtendes Reifendichtmittel erhalten.

Gemäß einer bevorzugten Ausführungsform der Erfindung wird in Verfahrensschritt a) zusätzlich ein Vernetzer zugegeben, welcher bevorzugt ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.
Mit den bevorzugten und besonders bevorzugten Vernetzern wird eine extrem schnelle Vernetzung bei relativ niedrigen Temperaturen erzielt.

Der in Schritt a) hergestellte Masterbatch wird in Verfahrensschritt b) mit wenigstens einem Polyolefin vermischt, wodurch die Komponente A hergestellt wird.

Bevorzugt erfolgt die Herstellung von Komponente A in Verfahrensschritt b) in einem Knetextruder oder einem Doppelschneckenextruder. Hierdurch wird eine ausreichende Durchmischung des nahezu festen Masterbatches mit der niederviskosen Flüssigkeit erzielt. Die genannten Extruder sind somit für die Verarbeitung hoher Viskositäten besonders geeignet. Es sind aber auch andere hierfür geeignete Vorrichtungen denkbar. Besonders bevorzugt erfolgt die Herstellung von Komponente A in Verfahrensschritt b) in einem Doppelschneckenextruder.

Bevorzugt ist das Polyolefin-wenigstens ein Polybuten. Dieses stellt die Klebrigkeit des fertigen Dichtmittels ein und bestimmt die Fließfähigkeit der Komponente A im Produktionsprozess sowie die lokale Ortsfestigkeit des fertigen Dichtmittels.
Bevorzugt ist wenigstens ein Polybuten mit einem Zahlenmittel der Molekulargewichtsverteilung Mn gemäß GPC von 800 bis 2500 g/mol, besonders bevorzugt 1200 bis 1600 g/mol, wiederum besonders bevorzugt 1200 bis 1400 g/mol, insbesondere beispielhaft 1300 g/mol.
Ein Polybuten mit einer derartigen Molekulargewichtsverteilung Mn weist bevorzugt eine dynamische Scherviskosität bei 100 °C von 20 bis 1000 mPas auf und ist aufgrund des Fließverhaltens in Kombination mit den weiteren Eigenschaften besonders bevorzugt.

Gemäß Verfahrensschritt c) wird wenigstens eine Vemetzungschemikalie in einer flüssigen Zusammensetzung Z mit einer dynamischen Scherviskosität bei 20 °C von 1 bis 1000 mPas, bereitgestellt, wodurch eine Komponente B enthaltend zumindest die wenigstens eine Vemetzungschemikalie erhalten wird.
Dabei ist insbesondere die wenigstens eine Vemetzungschemikalie homogen in der Zusammensetzung verteilt.

Für die wenigstens eine Vemetzungschemikalie und die Zusammensetzung gelten sämtliche obige Ausführungen. Beispielsweise wird Perkadox ® L-40 RPS verwendet.

Gemäß einer vorteilhaften Ausführungsform der Erfindung wird der Komponente B zeitlich nach dem Verfahrensschritt c) in einem weiteren Schritt c1) weitere Bestandteile, wie insbesondere wenigstens ein Polyolefin, bevorzugt wenigstens ein Polybuten, zugegeben. Für das Polyolefin, bevorzugt Polybuten, gelten sämtliche obige Ausführungen.
Anschließend werden die Bestandteile der Komponente B miteinander vermischt, wobei nunmehr erfindungsgemäß die wenigstens eine Vernetzungschemikalie besonders gut in der Komponente B verteilt wird und somit verbessert in der gesamten Dichtmittelzusammensetzung verteilt werden kann.

Weiterhin ist es denkbar, dass die in Schritt c) hergestellte Komponente B Klebrigmacher, wie z. B. die oben genannten Klebharze, enthält.

Gemäß Verfahrensschritt d) erfolgt das Vermischen von Komponente A und Komponente B, beispielsweise im Gewichtsverhältnis 10 zu 1 von Komponente A zu Komponente B, zur Herstellung des Reifendichtmittels.

Mit dem Verfahren wird durch die Kombination der Verfahrensschritte a) bis d) ein homogenes Reifendichtmittel erzielt, welches zudem durch die Homogenität ein vorteilhaftes Abdichtverhalten aufweist.

Sonstige Verfahrensschritte und Vorrichtungen sind beispielsweise wie in der WO 2008/141848 offenbart ausgeführt.

Die Vernetzung erfolgt insbesondere bei und nach dem Vermischen von Komponente A und Komponente B.

Das erfindungsgemäß erhaltene Reifendichtmittel wird mittels bekannter Vorrichtungen auf die Innenseite eines Fahrzeugluftreifens aufgebracht.

## Patentansprüche

1. Verfahren zur Herstellung eines selbsttätig abdichtenden Reifendichtmittels enthaltend wenigstens eine Vernetzungschemikalie, **dadurch gekennzeichnet, dass** wenigstens eine Vemetzungschemikalie in einer flüssigen Zusammensetzung Z mit einer dynamischen Scherviskosität bei 20 °C von 1 bis 1000 mPas zugegeben wird.

2. Verfahren nach Anspruch 1, **dadurch gekennzeichnet, dass** die flüssige Zusammensetzung Z wenigstens eine organische Flüssigkeit enthält.

3. Verfahren nach einem der vorherigen Ansprüche, **dadurch gekennzeichnet, dass** die Vemetzungschemikalie ein Vernetzungsinitiator ist.

4. Verfahren nach einem der vorherigen Ansprüche, **dadurch gekennzeichnet, dass** die Vemetzungschemikalie ein Metalloxid oder eine peroxidische Verbindung ist.

5. Verfahren nach Anspruch 4, **dadurch gekennzeichnet, dass** die peroxidische Verbindung ausgewählt ist aus der Gruppe bestehend aus Diaroylperoxiden, Diacylperoxiden und Peroxyestern.

6. Verfahren nach einem der vorherigen Ansprüche, **dadurch gekennzeichnet, dass** die flüssige Zusammensetzung Z eine Dispersion, insbesondere eine Suspension, oder eine Lösung der wenigstens einen Vernetzungschemikalie in einer Flüssigkeit ist.

7. Verfahren nach einem der vorherigen Ansprüche, **dadurch gekennzeichnet, dass** es wenigstens die folgenden Verfahrensschritte umfasst:
a) Vermischen wenigstens eines Kautschuks mit wenigstens einem Füllstoff zur Herstellung eines Masterbatches; und
b) Vermischen des Masterbatches mit wenigstens einem Polyolefin zur Herstellung einer Komponente A; und
c) Bereitstellung wenigstens einer Vemetzungschemikalie in einer flüssigen Zusammensetzung Z mit einer dynamischen Scherviskosität bei 20 °C von 1 bis 1000 mPas, wodurch eine Komponente B enthaltend zumindest die wenigstens eine Vernetzungschemikalie_erhalten wird; und
d) Vermischen von Komponente A und Komponente B zur Herstellung des Reifendichtmittels.

8. Verfahren nach Anspruch 7, **dadurch gekennzeichnet, dass** der Komponente B zeitlich nach dem Verfahrensschritt c) in einem weiteren Schritt c1) weitere Bestandteile, wie insbesondere wenigstens ein Polyolefin, zugegeben wird.

9. Verfahren nach Anspruch 7 oder 8, **dadurch gekennzeichnet, dass** das Polyolefin wenigstens ein Polybuten ist.

10. Verfahren nach einem der Ansprüche 7 bis 9, **dadurch gekennzeichnet, dass** es sich bei dem Kautschuk in Verfahrensschritt a) um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) und/oder Silikonkautschuk handelt.

11. Reifendichtmittel hergestellt durch das Verfahren nach einem der Ansprüche 1 bis 10.

12. Fahrzeugluftreifen, der wenigstens ein Reifendichtmittel nach Anspruch 11 wenigstens auf der dem Laufstreifen gegenüberliegenden Innenfläche aufweist.

## Claims

1. Process for producing a self-sealing tyre sealant containing at least one crosslinking chemical, **characterized in that** at least one crosslinking chemical in a liquid composition Z having a dynamic shear viscosity at 20°C of 1 to 1000 mPas is added.

2. Process according to Claim 1, **characterized in that** the liquid composition Z contains at least one organic liquid.

3. Process according to any of the preceding claims, **characterized in that** the crosslinking chemical is a crosslinking initiator.

4. Process according to any of the preceding claims, **characterized in that** the crosslinking chemical is a metal oxide or a peroxidic compound.

5. Process according to Claim 4, **characterized in that** the peroxidic compound is selected from the group consisting of diaroyl peroxides, diacyl peroxides and peroxyesters.

6. Process according to any of the preceding claims, **characterized in that** the liquid composition Z is a dispersion, in particular a suspension, or a solution of the at least one crosslinking chemical in a liquid.

7. Process according to any of the preceding claims, **characterized in that** it comprises at least the following process steps:
a) mixing at least one rubber with at least one filler to produce a masterbatch; and
b) mixing the masterbatch with at least one polyolefin to produce a component A; and
c) providing at least one crosslinking chemical in a liquid composition Z having a dynamic viscosity at 20°C of 1 to 1000 mPas to obtain a component B containing at least the at least one crosslinking chemical; and
d) mixing component A and component B to produce the tyre sealant.

8. Process according to Claim 7, **characterized in that** after the process step c) in a further step c1) the component B is admixed with further constituents, such as especially at least one polyolefin.

9. Process according to Claim 7 or 8, **characterized in that** the polyolefin is at least one polybutene.

10. Process according to any of Claims 7 to 9, **characterized in that** the rubber in process step a) is natural rubber (NR) and/or butadiene rubber (BR) and/or isoprene rubber (IR) and/or styrenebutadiene rubber (SBR) and/or polychloroprene (CR) and/or butyl rubber (IIR) and/or bromobutyl rubber (BIIR) and/or chlorobutyl rubber (CIIR) and/or silicone rubber.

11. Tyre sealant produced by the process according to any of Claims 1 to 10.

12. Pneumatic vehicle tyre comprising at least one tyre sealant according to Claim 11 at least on the inner surface opposite the tread.

## Revendications

1. Procédé pour la préparation d'un agent d'étanchéité automatique pour pneu contenant au moins une substance chimique de réticulation, **caractérisé en ce qu'**au moins une substance chimique de réticulation est ajoutée dans une composition liquide Z dotée d'une viscosité en cisaillement dynamique à 20 °C de 1 à 1 000 mPa.s.

2. Procédé selon la revendication 1, **caractérisé en ce que** la composition liquide Z contient au moins un liquide organique.

3. Procédé selon l'une quelconque des revendications précédentes, **caractérisé en ce que** la substance chimique de réticulation est un initiateur de réticulation.

4. Procédé selon l'une quelconque des revendications précédentes, **caractérisé en ce que** la substance chimique de réticulation est un oxyde métallique ou un composé peroxydique.

5. Procédé selon la revendication 4, **caractérisé en ce que** le composé peroxydique est choisi dans le groupe constitué par des peroxydes de diaroyle, des peroxydes de diacyle et des peroxyesters.

6. Procédé selon l'une quelconque des revendications précédentes, **caractérisé en ce que** la composition liquide Z est une dispersion, en particulier une suspension, ou une solution de l'au moins une substance chimique de réticulation dans un liquide.

7. Procédé selon l'une quelconque des revendications précédentes, **caractérisé en ce qu'**il comprend au moins les étapes de procédé suivantes :
a) mélange d'au moins un caoutchouc avec au moins une charge pour la préparation d'un mélange maître ; et
b) mélange du mélange maître avec au moins une polyoléfine pour la préparation d'un composant A ; et
c) mise à disposition d'au moins une substance chimique de réticulation dans une composition liquide Z dotée d'une viscosité en cisaillement dynamique à 20 °C de 1 à 1 000 mPa.s, par laquelle un composant B contenant au moins ladite au moins une substance chimique de réticulation est obtenue ; et
d) mélange du composant A et du composant B pour la préparation de l'agent d'étanchéité pour pneu.

8. Procédé selon la revendication 7, caractérisé en ce des ingrédients supplémentaires, comme en particulier au moins une polyoléfine, sont ajoutés au composant B dans le temps après l'étape de procédé c), dans une étape supplémentaire c1).

9. Procédé selon la revendication 7 ou 8, **caractérisé en ce que** la polyoléfine est au moins un polybutène.

10. Procédé selon l'une quelconque des revendications 7 à 9, **caractérisé en ce que** le caoutchouc dans l'étape de procédé a) est un caoutchouc naturel (NR) et/ou un caoutchouc de butadiène (BR) et/ou un caoutchouc d'isoprène (IR) et/ou un caoutchouc de styrène-butadiène (SBR) et/ou un polychloroprène (CR) et/ou un caoutchouc de butyle (IIR) et/ou un caoutchouc de bromobutyle (BIIR) et/ou un caoutchouc de chlorobutyle (CIIR) et/ou un caoutchouc de silicone.

11. Agent d'étanchéité pour pneu préparé par le procédé selon l'une quelconque des revendications 1 à 10.

12. Pneumatique pour véhicule, qui présente au moins un agent d'étanchéité pour pneu selon la revendication 11 au moins sur la surface intérieure opposée à la bande de roulement.
